(19) Europäisches Patentamt
European Patent Office
Office européen des brevets

(11) EP 3 763 776 A1

# (12) EUROPÄISCHE PATENTANMELDUNG

(43) Veröffentlichungstag:
**13.01.2021 Patentblatt 2021/02**

(21) Anmeldenummer: **19185931.3**

(22) Anmeldetag: **12.07.2019**

(51) Int Cl.:
***C08J 9/14*** *(2006.01)* ***C08J 9/00*** *(2006.01)*
***C08K 3/016*** *(2018.01)* ***C08G 18/22*** *(2006.01)*
***C08G 18/28*** *(2006.01)* ***C08G 18/32*** *(2006.01)*
***C08G 18/40*** *(2006.01)* ***C08G 18/42*** *(2006.01)*
***C08G 18/48*** *(2006.01)* ***C08G 18/76*** *(2006.01)*
*C08G 101/00* *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

## (54) VERFAHREN ZUR HERSTELLUNG VON FLAMMWIDRIGEN PUR-/PIR-HARTSCHÄUMEN

(57) Die vorliegende Erfindung betrifft eine Polyolformulierung zur Herstellung flammwidriger Polyurethan-/Polyisocyanurat-Hartschäume (im Folgenden einzeln oder gemeinsam auch als "PUR/PIR-Hartschäume" bezeichnet) enthaltend ein Polyesterpolyol mit einer OH-Zahl ≤ 250 mg KOH/g, einer Funktionalität von 1,5 - 2,5 und einem Gehalt an freien Glykolen mit $M_n$ < 150 g/mol von < 6 Gew.-%, , ein Polyethylenglykol mit einem mittleren Molgewicht von < 700 g/mol und einer mittleren Funktionalität < 2,5 und bestimmte Polyethylenglykol-alkylphenylether, sowie Verfahren zur Herstellung von PUR-/PIR-Hartschäumen unter Verwendung dieser Polyolformulierung und die so hergestellten PUR-/PIR-Hartschäume.

EP 3 763 776 A1

## Beschreibung

Die vorliegende Erfindung betrifft eine Polyolformulierung zur Herstellung flammwidriger Polyurethan-/Polyisocyanurat-Hartschäume (im Folgenden einzeln oder gemeinsam auch als "PUR/PIR-Hartschäume" bezeichnet) enthaltend ein Polyesterpolyol mit einer OH-Zahl ≤ 250 mg KOH/g, einer Funktionalität von 1,5 - 2,5 und einem Gehalt an freien Glykolen mit $M_n$ < 150 g/mol von < 6 Gew.-%, , ein Polyethylenglykol mit einem mittleren Molgewicht von < 700 g/mol und einer mittleren Funktionalität < 2,5 und bestimmte Polyethylenglykol-alkylphenylether, sowie Verfahren zur Herstellung von PUR-/PIR-Hartschäumen unter Verwendung dieser Polyolformulierung und die so hergestellten PUR-/PIR-Hartschäume.

Mit der Bezeichnung "PUR/PIR-Hartschäume" werden in der vorliegenden Anmeldung solche Hartschäume bezeichnet, die sowohl über Urethan- als auch über Isocyanuratstrukturen verfügen.

So wie alle organischen Polymere sind auch PUR-/PIR-Hartschäume brennbar, wobei die große Oberfläche pro Masseneinheit in Hartschäumen dieses Verhalten noch verstärkt. PUR-/PIR-Hartschäume werden häufig als Isolationsmaterialien eingesetzt, beispielsweise als Dämmstoff in der Bauindustrie. In vielen Einsatzgebieten von PUR-/PIR-Hartschäumen ist daher eine Brandschutzausrüstung durch zugesetzte Flammschutzmittel erforderlich.

Der Zusatz von höheren Mengen an Flammschutzmitteln bringt bekanntermaßen Nachteile mit sich, unter anderem für die mechanischen Eigenschaften der Polymere. Insbesondere Verbindungen, die Halogene enthalten, stehen außerdem wegen potentieller umweltschädlicher oder gesundheitsschädlicher Wirkungen in der Kritik.

In der Polyurethanchemie lässt sich die Brandeigenschaft des polymeren Grundgerüsts in gewissen Grenzen durch die Auswahl und Zusammensetzung der Monomeren steuern. Positiv auf das Brandverhalten wirkt sich beispielsweise die Anwesenheit von Isocyanuratstrukturen aus. Auch der Einsatz von hochmolekularen Polyesterbausteinen, führt oft zu einer Erhöhung der Flammwidrigkeit. Die Verarbeitung solcher hochmolekularer und dadurch hochviskoser Polyolbausteine ist jedoch aufwändig und technisch problematisch, wodurch dem Einsatz Grenzen gesetzt sind.

Ein Konzept zur Erniedrigung der Viskosität könnte in der Beimischung von Polyetherpolyolen liegen. Will man jedoch das industriell gut verfügbare Polyethylenglykol (PEG) verwenden, um die für viele PUR-/PIR-Anwendungen übliche Viskosität der Polyolformulierung von etwa 3500 - 4000 mPas einzustellen, weisen die erhaltenen Schäume oft eine mangelhafte Zellstruktur auf, resultierend in schlechten Oberflächen und für die großtechnische Anwendung ungenügenden Eigenschaften.

Die Aufgabe der vorliegenden Erfindung ist es daher, eine Polyolformulierung A enthaltend ein hochmolekulares Polyesterpolyol für die Herstellung von PUR-/PIR-Hartschäumen zur Verfügung zu stellen, wobei die PUR-/PIR-Hartschäume einen guten Flammschutz und gute mechanische Eigenschaften aufweisen.

US 2012/0202903 A beschreibt die Verwendung von Alkylethoxylatalkoholen mit einem durchschnittlichen HLB-Wert zwischen 10 und 15 als Verträglichkeitsvermittler für Polyolformulierungen, welche hohe Anteile an Wasser enthalten und für die Herstellung wassergetriebener Polyurethansprühschäume eingesetzt werden.

Diese Aufgabe konnte überraschend gelöst werden durch eine Polyolformulierung A, enthaltend

A1 35-89 Gew.-%, bezogen auf die Gesamtmasse der Polyolformulierung A, einer Polyesterpolyolkomponente, welche eine OH-Zahl von 190 - 310 mg KOH/g aufweist, bestehend aus

A1-1 mindestens eines Polyesterpolyols mit einer OH-Zahl ≤ 250 mg KOH/g, einer mittleren Funktionalität von 1,5 - 2,5 und einem Gehalt an freien Glykolen mit $M_n$ < 150 g/mol von < 6 Gew.-%, bezogen auf die Gesamtmasse von A1-1,
A1-2 optional weiteren Polyesterpolyolen, welche nicht unter die Definition von A1-1 fallen,

A2 10-40 Gew.-%, bezogen auf die Polyolformulierung A, eines oder mehrerer Polyethylenglykole mit einem mittleren Molgewicht von < 700 g/mol und einer mittleren Funktionalität < 2,5;

A3 weitere isocyanatreaktive Komponenten

A4 0,2-5 Gew.-%, bezogen auf die Polyolformulierung A, einer oder mehrerer Verbindungen ausgewählt aus der Gruppe bestehend aus

A4-1 eines Polyethylenglykol-2,4,6-trialkylphenylethern (Struktur I mit R5, R6, R7 = H, C1- bis C8-Alkyl) und
A4-2 Polyethylenglykol-2,4,6-triaralkylphenylethern (Struktur I mit R5, R6 und/oder R7 = Aryl) und
A4-3 Polyethylenglykol-alkylphenylethern (Struktur II)

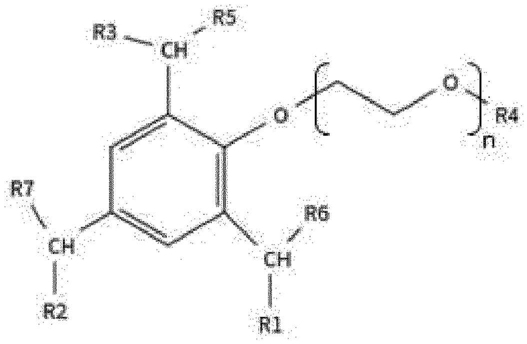

Struktur I

R1, R2, R3, R4 = H, C1-C4-Alkyl,
R5, R6, R7 = H, Cl- bis C8-Alkyl, Aryl
n = 7-20, bevorzugt 10-18, besonders bevorzugt 11-15

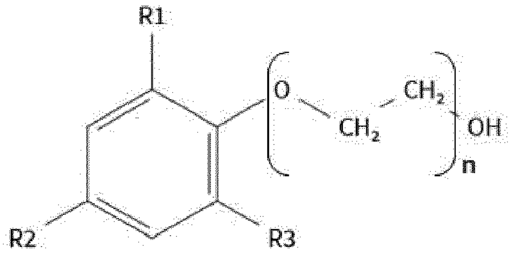

Struktur II

R1, R3 = H, $C(CH_3)_2CR4R5R6$
R2 = $C(CH_3)_2CR4R5R6$
R4, R5 = H oder $CH_3$
R6 = C2- bis C5-Alkyl, Aryl
n = 3-8

wobei die Verbindungen A4 ein Molgewicht von unter 1,5 kg/mol und ein Gehalt von 25-70% Ethylenoxid, bevorzugt 40-60% Ethylenoxid aufweisen, und

A5 gegebenenfalls weitere Hilfs- und Zusatzstoffe.

A6 0 - 2 Gew.-%, bezogen auf die Gesamtmasse der Polyolformulierung A, Wasser.

Gegenstand der Erfindung ist ebenfalls ein Verfahren zur Herstellung von PUR-/PIR-Hartschäumen durch die Umsetzung eines Reaktionsgemisches enthaltend
die Polyolformulierung A,
eine Polyisocyanat-Komponente B, und
ein Treibmittel C,
gegebenfalls in Anwesenheit einer katalytisch aktiven Komponente D,
wobei die Herstellung bei einer Kennzahl von 150 bis 600, bevorzugt 240-400, erfolgt.

Überraschenderweise konnte mit der erfindungsgemäßen Komponente A eine Formulierung zur Verfügung gestellt werden, welche hochmolekulare Polyesterbausteine enthält und trotzdem über eine niedrige Viskosität verfügt und sich zu PUR-/PIR-Hartschäumen mit guter Zellstruktur verarbeiten lässt. Die mit der erfindungsgemäßen Komponente A hergestellten Polyester weisen außerdem gute Flammwidrigkeiten und mechanische Eigenschaften, wie Zugfestigkeit, Bruchdehnung, Zähigkeit und Offenzelligkeit der PUR-/PIR-Hartschäume verbessert.

Bei der Polyesterpolyol - Komponente A1-1 handelt es sich um ein Polyesterpolyol mit einer OH-Zahl ≤ 240

mg KOH/g, bevorzugt ≤ 200 mg KOH/g, einer Funktionalität von 1,5 - 2,5 und einem Gehalt an freien Glykolen mit einer Molmasse < 150 g/mol von unter 6 Gew.-%, bezogen auf die Gesamtmasse von A1-1. Eine solche Polyolkomponente weist üblicherweise aufgrund ihres Molgewichts eine für PUR-/PIR-Hartschaumanwendungen hohe Viskosität auf, insbesondere eine Viskosität von > 5 Pa*s.

Der Anteil von Polyesterpolyolen A1-1 in der Polyesterpolyolkomponente A1 ist bevorzugt ≥ 60 Gew.-%, insbesondere ≥ 80 Gew.-% und ganz besonders bevorzugt ≥ 90 Gew.-%. Das Massenverhältnis von A1-1 zu A1-2 beträgt somit bevorzugt mindestens 6:1, insbesondere mindestens 8:1.

Polyesterpolyole mit einem niedrigen Gehalt an freien Glykolen sind an sich bekannt und ihre Herstellung und Einsatz in FCKW-basierten PUR/PIR-Formulierungen ist z.B. in der US 5,109,301 offenbart.

Die Polyesterpolyole der Komponente **A1** können beispielsweise Polykondensate aus mehrwertigen Alkoholen, vorzugsweise Diolen, mit 2 bis 12 Kohlenstoffatomen, vorzugsweise mit 2 bis 6 Kohlenstoffatomen, und Polycarbonsäuren, wie z.B. Di-, Tri- oder sogar Tetracarbonsäuren, oder Hydroxycarbonsäuren oder Lactonen sein, bevorzugt werden aromatische Dicarbonsäuren oder Gemische aus aromatischen und aliphatischen Dicarbonsäuren verwendet. Anstelle der freien Polycarbonsäuren können auch die entsprechenden Polycarbonsäureanhydride oder entsprechende Polycarbonsäureester von niederen Alkoholen zur Herstellung der Polyester verwendet werden. Bevorzugt verwendet werden Phthalsäureanhydrid, Terephthalsäure und/oder Isophthalsäure.

Als Carbonsäuren kommen insbesondere in Betracht: Bernsteinsäure, Glutarsäure, Adipinsäure, Korksäure, Azelainsäure, Sebazinsäure, Decandicarbonsäure, Tetrahydrophthalsäure, Hexahydrophthalsäure, Cyclohexandicarbonsäure, Tetrachlorphthalsäure, Itaconsäure, Malonsäure, Furandicarbonsäuren, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, Trimellithsäure, Benzoesäure, Trimellitsäure, Maleinsäure, Fumarsäure, Phthalsäure, Isophthalsäure und Terephthalsäure. Verwendet werden können ebenso Derivate dieser Carbonsäuren, wie beispielsweise Dimethylterephthalat. Die Carbonsäuren können dabei sowohl einzeln als auch im Gemisch verwendet werden. Als Carbonsäuren werden bevorzugt Adipinsäure, Sebacinsäure und/oder Bernsteinsäure, besonders bevorzugt Adipinsäure und/oder Bernsteinsäure, verwendet.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Propiolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Cyclohexandimethanol, 1,3-Butandiol, 1,4-Butandiol, 1,6-Hexandiol und Isomere, Neopentylglykol oder Hydroxypivalinsäureneopentylglykolester. Vorzugsweise verwendet werden Ethylenglykol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol.

Daneben können auch Polyole wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind.

Es können zusätzlich auch einwertige Alkanole mit verwendet werden.

In der Polyesterpolyolkomponente können auch solche Polyester-Polyole verwendet werden, welche über Polyether-Strukturen verfügen. Diese werden häufig auch als "Polyetheresterpolyole" bezeichnet. Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit 4 bis 6 Kohlenstoffatomen oder aromatische Dicarbonsäuren, die einzeln oder im Gemisch verwendet werden. Beispielhaft seien Korksäure, Azelainsäure, Decandicarbonsäure, Furandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit 1 bis 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit mehr als 2 Zerewitinoff-aktiven Wasserstoffen, besonders mit zahlenmittleren Funktionalitäten von 3 bis 8, insbesondere von 3 bis 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Als Komponente **A2** werden Polyethylenglykole, d. h. Umsetzungsprodukte eines niedermolekularen 2-3-funktionellen hydroxyfunktionellen Startermoleküls mit Ethylenoxid eingesetzt, wobei das Ethylenoxid ≥80% des Molgewichtes ausmacht. Bei den Startermolekülen handelt es sich insbesondere um Wasser, Ethylenglycol, Diethylenglycol, Propylenglycol, Glyzerin und/oder Trimethylolpropan. Die Herstellung solcher Polyethylenglycole ist dem Fachmann bekannt und viele dieser Substanzen sind kommerziell erhältlich. Geeignete Polyethylenglykole sind bevorzugt flüssig bei 298 K und verfügen insbesondere über Molekulargewichte von ≤ 700 g/mol und eine mittlere Funktionalität < 2,5, insbesondere bevorzugt weisen sie ein mittleres Molgewicht von 200-600 g/mol auf und ganz besonders bevorzugt eine mittlere Funktionalität von < 2,12.

Bei den weiteren isocyanat-reaktiven Komponenten **A3** handelt es sich beispielsweise um Polyole, wie Polyetherpolyole, Polycarbonatpolyolen und Polyether-Polycarbonatpolyolen, welche nicht unter die Definition der Komponenten **A1** und **A2** fallen.

Der Zusatz von langkettigen Polyolen, insbesondere Polyetherpolyolen, kann die Verbesserung der Fließfähigkeit des Reaktionsgemisches und die Emulgierfähigkeit der treibmittelhaltigen Formulierung bewirken. Für die Herstellung von Verbundelementen können diese beispielsweise die kontinuierliche Produktion von Elementen mit flexiblen oder starren Deckschichten ermöglichen.

In einer bevorzugten Ausführungsform weisen langkettige Polyole Funktionalitäten von ≥ 1,2 bis ≤ 3,5 auf und besitzen eine Hydroxylzahl zwischen 10 und 100 mg KOH/g, bevorzugt zwischen 20 und 50 mg KOH/g, und besitzen mehr als 70 mol%, bevorzugt mehr als 80 mol%, insbesondere mehr als 90 mol% primäre OH-Gruppen. Die langkettigen Polyole sind bevorzugt Polyetherpolyole mit Funktionalitäten von ≥1,2 bis ≤ 3,5 und einer Hydroxylzahl zwischen 10 und 100 mg KOH/g.

Der Zusatz von mittelkettigen Polyolen, insbesondere Polyetherpolyolen, und niedermolekularen isocyanatreaktiven Verbindungen, kann die Verbesserung der Haftung und Dimensionsstabilität des resultierenden Schaumes bewirken. Für die Herstellung von Verbundelementen mit dem erfindungsgemäßen Verfahren können diese mittelkettigen Polyole die kontinuierliche Produktion von Elementen mit flexiblen oder starren Deckschichten ermöglichen. Die mittelkettigen Polyole, bei denen es sich insbesondere um Polyetherpolyole handelt, weisen Funktionalitäten von ≥ 2 bis ≤ 6 auf und besitzen eine Hydroxylzahl zwischen 300 und 700 mg KOH/g.

Bei den verwendeten Polyetherpolyolen handelt es sich um die dem Fachmann bekannten, in der Polyurethansynthese einsetzbaren Polyetherpolyole mit den genannten Merkmalen.

Verwendbare Polyetherpolyole sind beispielsweise Polytetramethylenglykolpolyether, wie sie durch Polymerisation von Tetrahydrofuran mittels kationischer Ringöffnung erhältlich sind.

Polyetherpolyole werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid. Die Alkylenoxide können in Kombination mit $CO_2$ umgesetzt werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 2,2'-, 2,4'- und 4,4'-Diaminodiphenylmethan.

Vorzugsweise verwendet werden zwei oder mehrwertige Alkohole, wie Ethandiol, 1,2- und 1,3-Propandiol, Diethylenglykol, Dipropylenglykol, 1,4-Butandiol, 1,6-Hexandiol, Triethanolamin, Bisphenole, Glycerin, Trimethylolpropan, Pentaerythrit, Sorbit und Saccharose.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2 910 585 A1, [0024] - [0041], beschrieben. Beispiele zu Polycarbonatpolyolen und ihre Herstellung finden sich unter anderem in der EP 1 359 177 A1. Die Herstellung geeigneter Polyetheresterpolyole ist unter anderem in der WO 2010/043624 A und in der EP 1 923 417 A beschrieben.

Falls zur Herstellung der PUR/PIR-Hartschäume niedermolekulare isocyanat-reaktiven Verbindungen Anwendung finden, z.B. in der Funktion als Kettenverlängerungsmittel und/oder Vernetzungsmittel, kommen diese zweckmäßigerweise in einer Menge von maximal 6 Gew.-%, bezogen auf das Gesamtgewicht der Polyolformulierung A zum Einsatz. Verbindungen, die aufgrund ihrer Struktur sowohl unter die Definition der Komponente **A3** als auch unter eine der Definitionen der oben beschriebenen Polyolverbindungen **A1** oder **A2** fallen, werden mengenmäßig zu der **A1** oder **A2** und nicht zu der Komponente **A3** gerechnet.

Die Mischung der Polyole A1 und A2 weist bevorzugt eine Viskosität < 4 Pa*s auf, insbesondere eine Viskosität von 2 - 4 Pa*s.

Die Mischung der Polyole A1 und A2 weist bevorzugt eine OH-Zahl von $\leq$ 260 mg KOH/g auf, insbesondere von $\leq$ 230 mg KOH/g

Das Massenverhältnis von Polyesterpolyolen A1 zu Polyethylenglykolen A2 in der Poylolformulierung beträgt bevorzugt 2-10.

Im Rahmen dieser Anmeldung ist mit der singulären Bezeichnung der Komponenten - "Polyol", "Polyesterpolyol" usw. - jeweils die Mischung aller Komponenten gemeint, die unter die entsprechende Definition fallen.

Bei den Verbindungen A4 handelt es sich um eine oder mehrere Verbindungen ausgewählt aus der Gruppe bestehend aus

A4 0,2-5 Gew.-%, bezogen auf die Polyolformulierung A, einer oder mehrerer Verbindungen ausgewählt aus der Gruppe bestehend aus

A4-1 eines Polyethylenglykol-2,4,6-trialkylphenylethern (Struktur I mit R5, R6, R7 = H, C1- bis C8-Alkyl) und
A4-2 Polyethylenglykol-2,4,6-triaralkylphenylethern (Struktur I mit R5, R6 und/oder R7 = Aryl) und
A4-3 Polyethylenglykol-alkylphenylethern (Struktur II)

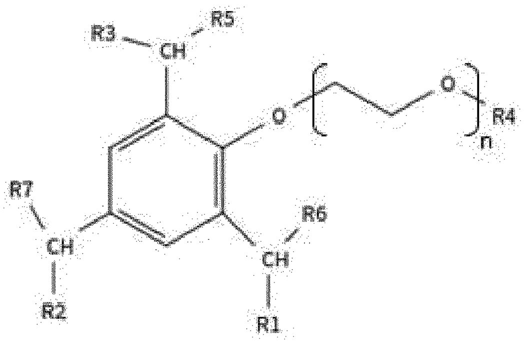

Struktur I

R1, R2, R3, R4 = H, C1-C4-Alkyl,
R5, R6, R7 = H, C1- bis C8-Alkyl, Aryl
n = 7-20, bevorzugt 10-18, besonders bevorzugt 11-15

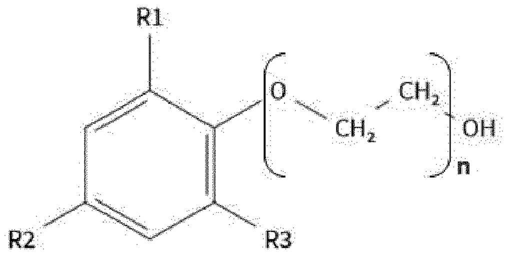

Struktur II

R1, R3 = H, $C(CH_3)_2CR4R5R6$
R2 = $C(CH_3)_2CR4R5R6$
R4, R5 = H oder $CH_3$
R6 = C2- bis C5-Alkyl, Aryl
n = 3-8

wobei die Verbindungen A4 ein Molgewicht von unter 1,5 kg/mol und ein Gehalt von 25-70% Ethylenoxid, bevorzugt 40-60% Ethylenoxid aufweisen.

wobei die Verbindungen **A4** ein Molgewicht von unter 1,5 kg/mol und ein Gehalt von 25-70% Ethylenoxid, bevorzugt 40-60% Ethylenoxid aufweisen.

Bevorzugte Verbindungen A4 sind in Tabelle 1 gezeigt und sind solche mit der Struktur IV (fällt unter die Definition der Verbindungen A4-2), Struktur V (fällt unter die Definition der Verbindungen A4-1) und Struktur VI (fällt unter die Definition der Verbindungen A4-3).

Tabelle 1

| | | | |
|---|---|---|---|
| | 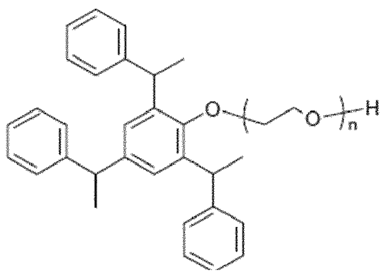 | 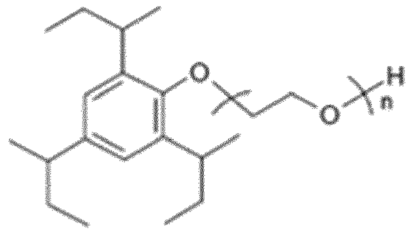 | 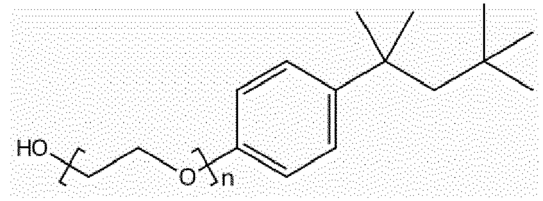 |
| | Struktur IV | Struktur V | Struktur VI |
| IUPAC | α-[2,4,6-tris(1-phenylethyl)phenyl]-ω-hydroxypoly(oxy-1,2-ethanediyl) | α-[2,4,6-tris(1-methylpropyl)phenyl]-(ω-hydroxy-poly(oxy-1,2-ethanediyl) | α-[4-(1,1,3,3-tetramethylbutyl)phenyl]-ω-hydroxy-poly(oxy-1,2-ethanediyl), |
| CAS-Nummer | 70559-25-0 | 31800-76-7 | 9002-93-1 |
| Sonstige Namen | Polyethylene glycol 2,4,6-tristyrylphenyl ether | Polyethylene glycol mono(2,4,6-tri-*sec*-butylphenyl) ether | Polyethylenglycolmono(*p-tert*-octylphenyl)ether |
| Handelsnamen | Emulsogen TS100, TS160, TS290, TS600 (Fa. Clariant) | Sapogenat T110 (Clariant) | Triton X45 |

Gegebenenfalls können neben den Verbindungen **A4** auch noch ein oder mehrere weitere Additive als Komponente **A5** eingesetzt werden. Beispiele für die Komponente **A5** sind oberflächenaktive Substanzen, Schaumstabilisatoren, Zellregler, Flammschutzmittel, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole unterschiedlich von A4, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Emulgatoren, welche in ihrer Struktur unter die Definition der Komponente **A4** fallen, werden mengenmäßig auch zu der Komponente **A4** und nicht zu der Komponente **A5** gerechnet.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu nennen. Im Einzelnen seien beispielhaft genannt: anorganische Füllstoffe wie silikatische Mineralien, beispielsweise Schichtsilikate wie z. B. Antigorit, Serpentin, Sepiolit, Hornblenden, Amphibole, Chrisotil, Montmorillonit und Talkum, Metalloxide, wie Kaolin, Aluminiumoxide, Titanoxide und Eisenoxide, Metallsalze, wie Kreide, Huntit, Schwerspat und anorganische Pigmente, wie Magnetit, Goethit, Cadmiumsulfid und Zinksulfid, sowie Glas u.a. sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kolophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und Kohlenstofffasern.

Zur Herstellung der PUR-/PIR-Hartschäume wird bevorzugt auch ein Flammschutzmittel **A5** eingesetzt.

Flammschutzmittel sind dem Fachmann im Prinzip bekannt und beispielsweise in "Kunststoffhandbuch", Band 7 "Polyurethane", Kapitel 6.1 beschrieben. Dies können beispielsweise halogenierte Polyester und Polyole, brom- und chlorhaltige Paraffine oder Phosphorverbindungen, wie zum Beispiel die Ester der Orthophosphorsäure und der Metaphosphorsäure, die ebenfalls Halogen enthalten können, sein. Bevorzugt werden bei 298 K flüssige Flammschutzmittel gewählt. Beispiele sind Triethylphosphat, Diethylethanphosphonat, Kresyldiphenylphosphat und andere Triarylphosphate, Dimethylpropanphosphonat, Hydroxymethylphosphonate und Tris($\beta$-chlorisopropyl)phosphat. Besonders bevorzugt sind Flammschutzmittel ausgewählt aus der Gruppe bestehend aus Tris(chloro-2-propyl)-phosphat (TCPP) und Triethylphosphat (TEP) und Mischungen daraus. Bevorzugt werden Flammschutzmittel in einer Menge von 1 bis 30 Gew.-%, besonders bevorzugt 5 bis 30 Gew.- %, bezogen auf das Gesamtgewicht der Isocyanat-reaktiven Zusammensetzung A) eingesetzt so dass ein Phosphorgehalt im Schaumstoff von 0,4-1,3 Gew.-% erreicht wird. Um bestimmte Eigenschaftsprofile (Viskosität, Sprödigkeit, Brennbarkeit, Halogengehalt etc.) zu erzielen, kann es auch günstig sein, unterschiedliche Flammschutzmittel miteinander zu kombinieren. In bestimmten Ausführungsformen ist die Anwesenheit von Triethylphosphat (TEP) im Flammschutzmittelgemisch oder als alleiniges Flammschutzmittel besonders vorteilhaft.

Die Polyolformulierung enthält weiterhin A6 maximal 2 Gew.-%, bevorzugt maximal 2,0 Gew.-%, insbesondere bevorzugt maximal 1,2 Gew.-% Wasser, bezogen auf die Gesamtmasse der Polyolformulierung A.

Die zahlenmittlere Molmasse $M_n$ (auch: Molekulargewicht) wird im Rahmen dieser Erfindung durch Gelpermeationschromatographie nach DIN 55672-1 (August 2007) bestimmt.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Die OH-Zahl wird im Rahmen der vorliegenden Erfindung nach der Norm DIN 53240-1 (Juni 2013) bestimmt.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül bzw. gemittelt über die jeweilige Mischung der Moleküle).

Das Äquivalentgewicht gibt das Verhältnis der zahlenmittleren Molekularmasse und der Funktionalität der Isocyanat-reaktiven Komponente an. Die Angaben des Äquivalentgewichts für Mischungen berechnen sich aus Äquivalentgewichten der einzelnen Komponenten in ihren jeweiligen molaren Anteilen und beziehen sich auf das zahlenmittlere Äquivalentgewicht der Mischung.

Als Treibmittel C kann physikalisches Treibmittel eingesetzt werden, wie beispielsweise niedrig siedende organische Verbindungen, wie z.B. Kohlenwasserstoffe, halogenierte Kohlenwasserstoffe, Ether, Ketone, Carbonsäureester oder Kohlensäureester. Geeignet sind insbesondere organische Verbindungen, welche gegenüber der Isocyanatkomponente **B** inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele solcher, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie z. B. Cyclopentan und/oder Cyclohexan, Ether, wie z. B. Furan, Dimethylether und Diethylether, Ketone, wie z. B. Aceton und Methylethylketon, Carbonsäurealkylester, wie z. B. Methylformiat, Dimethyloxalat und Ethylacetat und halogenierte Kohlenwasserstoffe, wie z. B. Methylenchlorid, Difluormethan, Trifluormethan, Difluorethan, Tetrafluorethan, und Heptafluorpropan. Bevorzugt werden keine Treibmittel eingesetzt, für die eine für die Ozonschicht der Erde schädliche Wirkung bekannt ist. Auch bevorzugt ist der Einsatz von (hydro)fluorierten Olefinen, wie z. B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden.

Als Treibmittel C kann auch chemisches Treibmittel, wie beispielsweise Wasser, Carbonsäure und deren Gemische, verwendet werden. Diese reagieren mit Isocyanatgruppen unter Bildung des Treibgases, wie beispielsweise im Falle von Wasser entsteht dabei Kohlendioxid und im Falle von z. B. Ameisensäure entsteht dabei Kohlendioxid und Kohlenstoffmonoxid. Als Carbonsäure wird bevorzugt mindestens eine Verbindung, ausgewählt aus der Gruppe bestehend aus Ameisensäure, Essigsäure, Oxalsäure und Ricinolsäure, eingesetzt. Als chemisches Treibmittel wird besonders bevorzugt Wasser eingesetzt.

Vorzugsweise werden keine halogenierten Kohlenwasserstoffe als Treibmittel verwendet.

Als Treibmittel **C** wird mindestens eine Verbindung, ausgewählt aus der Gruppe bestehend aus physikalischen und chemischen Treibmittel, eingesetzt. Bevorzugt wird nur physikalisches Treibmittel eingesetzt. In einer bevorzugten Ausführungsform weisen die eingesetzten Treibmittel **C** ein mittleres global warming potential (GWP) von < 120, bevorzugt ein GWP von < 20 auf.

Als Katalysator **D** zur Herstellung der PUR-/PIR-Hartschäume werden Verbindungen verwendet, welche die Reaktion der reaktiven Wasserstoffatome, insbesondere Hydroxylgruppen enthaltenden Verbindungen mit der Isocyanatkomponente **B** beschleunigen, wie z. B. tertiäre Amine oder Metallsalze. Die Katalysatorkomponenten können dem Reaktionsgemisch zudosiert oder auch ganz oder teilweise in der Polyolformulierung **A** vorgelegt werden.

Verwendet werden beispielsweise tertiäre Amine, wie Triethylamin, Tributylamin, Dimethylbenzylamin, Dicyclohexylmethylamin, Dimethylcyclohexylamin, N, N ,N', N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N, N, N, N-Tetramethylhexandiamin-1,6, Pentamethyldiethylentriamin, Bis[2-(dimethylamino)ethyl]ether, Dimethylpiperazin, N-Dimethylaminoethylpiperidin, 1,2-Dimethyl-imidazol, 1-Azabicyclo-(3,3,0)-octan, 1,4-Diaza-bi-cyclo-(2,2,2)-octan (Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazin, z.B. N,N',N"-Tris-(dimethylaminopropyl)hexahydrotriazin und Triethylendiamin.

Es können auch Metallsalze wie z. B. Alkali- oder Übergangsmetallsalze eingesetzt werden. Als Übergangsmetallsalze werden beispielsweise Zink-, Wismut-, Eisen-, Blei- oder bevorzugt Zinnsalze eingesetzt. Beispiele für eingesetzte Übergangsmetallsalze sind Eisen(II)-chlorid, Zinkchlorid, Bleioctoat, Zinndioctoat, Zinndiethylhexoat und Dibutylzinndilaurat. Besonders bevorzugt ist das Übergangsmetallsalz ausgewählt aus mindestens einer Verbindung aus der Gruppe bestehend aus Zinndioctoat, Zinndiethylhexoat und Dibutylzinndilaurat. Beispiele für Alkalimetallsalze sind Alkalialkoholate, wie z. B. Natriummethylat und Kaliumisopropylat, Alkalicarboxylate, wie z. B. Kaliumacetat, sowie Alkalimetallsalze von langkettigen Fettsäuren mit 10 bis 20 C-Atomen und gegebenenfalls seitenständigen OH-Gruppen. Bevorzugt als Alkalimetallsalz werden ein oder mehrere Alkalicarboxylate eingesetzt.

Als Katalysator **D** kommen ferner in Betracht: Amidine, wie z. B. 2,3-Dimethyl-3,4,5,6-tetrahydropyrimidin, Tetraalkylammoniumhydroxide, wie z. B. Tetramethylammonium-hydroxid, Alkalihydroxide, wie z. B. Natriumhydroxid, und Tetraalkylammonium- oder Phosphoniumcarboxylate. Darüber hinaus sind Mannichbasen und Salze von Phenolen geeignete Katalysatoren. Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu besonders flammwidrigen PIR-Hartschäumen.

Die Katalysatorkomponenten können dem Reaktionsgemisch zudosiert oder auch ganz oder teilweise in der Polyolformulierung **A** vorgelegt werden.

Die Reaktivität des Reaktionsgemisches wird i.d.R. mittels der Katalysatorkomponente auf die Bedürfnisse angepasst. So verlangt die Herstellung von dünnen Platten ein Reaktionsgemisch mit einer höheren Reaktivität als die Herstellung von dickeren Platten. Typische Parameter sind die Startzeit und die Abbindezeit als Maß für die Zeit, zu der das Reaktionsgemisch zu reagieren beginnt, und für den Zeitpunkt, an dem ein hinreichend stabiles Polymernetzwerk gebildet ist.

Die oben genannten Katalysatoren können alleine oder in Kombination miteinander eingesetzt werden.

Als geeignete Isocyanatkomponente **B** kommen z. B. Polyisocyanate, d. h. Isocyanate mit einer NCO-Funktionalität von mindestens 2, in Frage. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'- isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1- bis C6-Alkylgruppen. Bevorzugt wird die Isocyanatkomponente **B** ausgewählt aus mindestens einer Verbindung aus der Gruppe bestehend aus MDI, polymeres MDI und TDI.

Neben den vorstehend genannten Polyisocyanaten können anteilig auch modifizierte Diisocyanate mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat, mit eingesetzt werden.

Statt oder zusätzlich zu den oben genannten Polyisocyanaten können auch geeignete NCO-Präpolymere als Isocyanatkomponente **B** eingesetzt werden. Die Präpolymere sind herstellbar durch Umsetzung eines oder mehrerer Polyisocyanate mit einem oder mehreren Polyolen, entsprechend den unter den Isocyanat-reaktiven Komponenten **A1** beschriebenen Polyolen.

Für den Einsatz als Polyisocyanat-Komponente sind polymere MDI-Typen im Hartschaum gegenüber monomeren Isocyanaten besonders bevorzugt.

Der NCO-Gehalt der Polyisocyanatkomponente A) beträgt bevorzugt von ≥ 29,0 Gew.-% bis ≤ 33,0 Gew.%, und weist bevorzugt eine Viskosität bei 25 °C von ≥ 80 mPas bis ≤ 2900 mPas, besonders bevorzugt von ≥ 95 mPas bis ≤ 850 mPas bei 25°C auf.

Der NCO-Wert (auch: NCO-Gehalt, Isocyanatgehalt) wird bestimmt mittels EN ISO 11909:2007. Falls nicht anders angegeben, handelt es sich um die Werte bei 25°C.

Bei Angaben zur Viskosität handelt es sich um die dynamische Viskosität, bestimmt mittels DIN EN ISO 3219:1994-10 "Kunststoffe - Polymere/Harze in flüssigem, emulgiertem oder dispergiertem Zustand".

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Erfindungsgemäß beträgt die Kennzahl (Index) im Reaktionsgemisch 150 bis 600, bevorzugt 240 bis 400. Diese Kennzahl liegt besonders bevorzugt in einem Bereich von 240 bis 400 in dem ein hoher Anteil an Polyisocyanuraten (PIR) vorliegt (der Schaumstoff wird als PIR-Schaumstoff oder PUR-/PIR-Schaumstoff bezeichnet) und zu einer höheren Flammwidrigkeit des PUR-/PIR-Schaumstoffs selbst führt.

Der NCO-Wert (auch: NCO-Gehalt, Isocyanatgehalt) wird bestimmt mittels EN ISO 11909 (Mai 2007). Falls nicht anders angegeben, handelt es sich um die Werte bei 25°C.

Die Erfindung betrifft ebenfalls einen PUR-/PIR-Schaumstoff, der durch das erfindungsgemäße Verfahren hergestellt ist.

Aus den Komponenten **A - D** wird durch Mischung ein Reaktionsgemisch erzeugt, welche zu dem PUR/PIR-Schaumstoff führt. Die Herstellung erfolgt im Allgemeinen über Vermischung aller Komponenten über übliche Hoch- oder Niederdruckmischköpfe.

Die Herstellung der erfindungsgemäßen PUR-/PIR-Hartschäume erfolgt nach dem Fachmann bekannten Einstufenverfahren, bei dem die Reaktionskomponenten kontinuierlich oder diskontinuierlich miteinander zur Reaktion gebracht werden und dann anschließend entweder manuell oder durch Zuhilfenahme maschineller Einrichtungen im Hochdruck- oder Niederdruckverfahren nach Austrag auf ein Transportband oder in geeignete Formen zur Aushärtung gebracht werden. Beispiele sind in US-A 2 764 565, in G.Oertel (Hrsg.) "KunststoffHandbuch", Band VII, Carl Hanser Verlag, 3. Auflage, München 1993, S. 267 ff., sowie in K. Uhlig (Hrsg.) "Polyurethan Taschenbuch", Carl Hanser Verlag, 2. Auflage, Wien 2001, S. 83-102 beschrieben.

Die erfindungsgemäßen PUR-/PIR-Hartschäume finden bevorzugt zur Herstellung von Verbundelementen Verwendung. Üblicherweise findet hier die Verschäumung in kontinuierlicher oder diskontinuierlicher Weise gegen mindestens eine Deckschicht statt.

Ein weiterer Gegenstand der Erfindung ist demzufolge die Verwendung eines erfindungsgemäßen PUR-/PIR-Hartschaumes als Isolationsschaumstoff und/oder als Haftvermittler in Verbundelementen, wobei die Verbundelemente eine einen erfindungsgemäßen PUR-/PIR-Hartschaum umfassende Schicht und mindestens eine Deckschicht umfassen. Die Deckschicht wird hierbei zumindest teilweise von einer den erfindungsgemäßen PUR-/PIR-Hartschaum umfassenden Schicht kontaktiert. Verbundelemente der hier interessierenden Art werden auch als Sandwich-Elemente oder Dämmplatten bezeichnet und dienen in der Regel als Bauelemente für den Schallschutz, die Dämmung, zum Hallenbau oder für den Fassadenbau. Die Deckschichten können dabei z.B. Metallbahnen, Kunststoffbahnen oder bis zu 7 mm starke Spanplatten bilden, abhängig vom Einsatzzweck der Verbundelemente. Bei den einen oder zwei Deckschichten kann es sich jeweils um eine flexible Deckschicht, z.B. um eine Aluminium-Folie, Papier, Multischicht-Deckschichten aus Papier und Aluminium oder aus Mineralvließ, und/oder um eine starre Deckschicht, z.B. aus Stahlblech oder Spanplatten, handeln.

## Beispiele

Einsatzstoffe:

| | |
|---|---|
| A1-1-a | Aromatisch / aliphatischer Polyester, f = 2, enthält 1,5 Gew.-% freies Ethylenglykol, 2,4 Gew.-% freies Diethylenglykol (nach Monte-Carlo-Berechnung), OH-Zahl 195 mg KOH/g, Säurezahl 0,55 mg KOH/g. |
| A2-a | Polyethylenglykol PEG 400, Viskosität 0,12 Pa*s (25°C) |
| A2-b | Umsetzungsprodukt aus Trimethylolpropan und Ethylenoxid im molaren Verhältnis OH:Ethylenoxid von 1:4. Die OH-Zahl beträgt 250 mg KOH/g, die Viskosität beträgt 0,37 Pa*s bei 25°C. |
| A3-a | Umsetzungsprodukt aus Phthalsäureanhydrid und Diethylenglycol im molaren Verhältnis 1:1 |
| A4-1-a | Polyethylenglycolmono(2,4,6-tri-sec-butylphenyl)ether (Struktur I mit n = 11, R1=R2=R3 = $CH_3$, R4 = H, R5=R6=R7 = $C_2H_5$; 67 Gew.-% Ethylenoxid; HLB = 13) |
| A4-2-a | Polyethylene glycol 2,4,6-tristyrylphenyl ether (n = 10, R1=R2=R3 = $CH_3$, R4 = H, R5=R6=R7 = $C_6H_5$;54 Gew.-% Ethylenoxid; HLB = 10) |
| A4-2-b | Polyethylene glycol 2,4,6-tristyrylphenyl ether (n = 16, R1=R2=R3 = $CH_3$, R4 = H, R5=R6=R7 = $C_6H_5$, 65 Gew.-% Ethylenoxid; HLB = 13) |
| A4-2-c | Polyethylene glycol 2,4,6-tristyrylphenyl ether (n = 29, R1=R2=R3 = $CH_3$, R4 = H, R5=R6=R7 = $C_6H_5$77 Gew.-% Ethylenoxid; HLB = 15) |
| A4-2-d | Polyethylene glycol 2,4,6-tristyrylphenyl ether (n = 60, R1=R2=R3 = $CH_3$, R4 = H, R5=R6=R7 = $C_6H_5$, 87 Gew.-% Ethylenoxid; HLB = 17) |
| A5-a | Polyether-modifiziertes Oligodimethylsiloxan |
| A5-b | Mischung aus Levagard® PP und Levagard® TEP im Gewichtsverhältnis 4:1 (beide Lanxess AG) |
| B-a | polymeres MDI mit einer Viskosität von 700 mPas bei 25°C und einem NCO-Gehalt von 31,5 Gew.-% (Desmodur® 44V70L, Covestro Deutschland AG) |
| C-a | n-Pentan |

D-a 25 Gew.-% Kaliumacetat in Diethylenglycol

**Herstellung und Prüfung der PUR-/PIR-Hartschäume**

Die Flammenausbreitung der PUR-/PIR-Hartschäume wurde durch Kantenbeflammung mit dem Kleinbrennertest gemäß DIN 4102-1 (Mai 1998) an einer 18 cm x 9 cm x 2 cm großen Probe gemessen. Angegeben ist der Wert für die maximale vertikale Flammhöhe in cm.

Die Messung der mittleren Wärmefreisetzungsrate und ihres Maximums (MARHE), der CO-Ausbeute und der spezifischen Lichtabsorptionsfläche SEA als Maß für die Rauchgasdichte wurde nach der ISO-Norm 5660-1:1990 mit einem "Cone Calorimeter" gemessen. Die Probenkörper von 1 dm x 1 dm x 0,3 dm werden dabei 20 min lang durch einen Wärmestrahler mit 50 kW/m2 bestrahlt. Die ermittelte CO-Ausbeute gibt dabei den Durchschnittswert aus zwei Messungen an.

Die OH-Zahl (Hydroxylzahl) wurde gemäß DIN 53240-1 (Juni 2013) bestimmt.

Die Bestimmung der Säurezahl wurde gemäß DIN EN ISO 2114 (November 2006) durchgeführt.

Die Bestimmung der Viskosität erfolgte auf einem Physica MCR 501 Rheometer der Fa. Anton Paar. Es wurde eine Kegel-Platte-Konfiguration mit einem Abstand von 1 mm gewählt (Messsystem DCP25). Das Polyol (0,1 g) wurde auf der Rheometerplatte aufgebracht und bei 25 °C einer Scherung von 0,01 bis 1000 1/s unterworfen und für 10 min alle 10 s die Viskosität gemessen. Angegeben ist die über alle Messpunkte gemittelte Viskosität.

Die Offenzelligkeit der PUR-/PIR-Hartschäume wurde mit einem Accupyk-1330-Gerät an Probenkörpern mit den Maßen 5 cm x 3 cm x 3 cm nach DIN EN ISO 4590 (August 2003) gemessen.

Druckfestigkeit in Steigrichtung gemäß DIN ISO 826 (1.5.2013)

Die Zellstruktur des Schaumstoffes wurde durch optische Begutachtung ermittelt.

Die Messung der Rohdichte wurde nach der DIN EN ISO 845 (Oktober 2009) durchgeführt.

Durch Zugversuche gemäß DIN 53430 (September 1975) wurde an Zugstäben (gefräst nach DIN 53430 5.1) die Zugfestigkeit ($\sigma_{Fmax}$), die Bruchdehnung ($\varepsilon_{Bruch}$) und ein Maß für die Zähigkeit ($\sigma_{Fmax}*\varepsilon_{Bruch}/2$) bestimmt.

Formulierungen

Die jeweiligen Polyolformulierungen wurden erhalten aus einer Basis - Polyolkomponente, enthaltend

46 Gewichtsteile A1-1-a
5 Gewichtsteile A2-b
2 Gewichtsteile A3-a
4 Gewichtsteile A5-a
25 Gewichtsteile A5-b.

Die Basis - Polyolkomponente enthält weiterhin bereits 5 Gewichtsteile des Katalysators D-a.

Zu der Basis-Polyolkomponente wurden zur Herstellung der unterschiedlichen PUR-PIR - Schäume jeweils noch die weiteren Polyolkomponenten gemäß Tabelle 2 und n-Pentan als Treibmittel in einem Pappbecher verrührt.

PUR-/PIR-Schäume

Die erhaltene isocyanatreaktive Mischung wurde mit dem Isocyanat vermischt und das Reaktionsgemisch in eine Papierform (3 x 3 x 1 $dm^3$) gegossen und darin ausreagiert. Die genauen Rezepturen der einzelnen Versuche sind in den nachfolgenden Tabellen wiedergegeben, ebenfalls die Ergebnisse der physikalischen Messungen an den erhaltenen Proben.

Die Reaktionsparameter sowie die Schaumeigenschaften sind in Tabelle 4 wiedergegeben.

Tabelle 2.

| Beispiel | | 1* | 2* | **3** | **4** | **5** | 6* | 7* |
|---|---|---|---|---|---|---|---|---|
| Basispolyol-Komponente | Gew.-Teile | 87 | 87 | **87** | **87** | **87** | 87 | 87 |
| A2-a | Gew.-Teile | 0 | 16 | **16** | **16** | **16** | 16 | 16 |
| A1-1-a | Gew.-Teile | 18 | 2 | | | | | |
| A4-1-a/11 EO | Gew.-Teile | | | **2** | | | | |
| A4-2a/ 12 EO | Gew.-Teile | | | | **2** | | | |

(fortgesetzt)

| Beispiel | | 1* | 2* | **3** | **4** | **5** | 6* | 7* |
|---|---|---|---|---|---|---|---|---|
| A4-2b / 16 EO | Gew.-Teile | | | | | **2** | | |
| A4-2c / 29 EO | Gew.-Teile | | | | | | 2 | |
| A4-2d / 60 EO | Gew.-Teile | | | | | | | 2 |
| D-a | Gew.-Teile | 19 | 19 | **19** | **19** | **19** | 19 | 19 |
| B-a | Gew.-Teile | 150 | 160,5 | **157,5** | **157,5** | **157,5** | 157,5 | 157,5 |
| Kennzahl | | 320 | 320 | **320** | **320** | **320** | 320 | 320 |
| Mittlere Funktionalität aller Polyethylenoxide A2-a und A2-b | | 3,00 | 2,16 | 2,16 | 2,16 | 2,16 | 2,16 | 2,16 |
| Viskosität Polyolmischung A1-1-a, A2-a und A2-b ([1]) | Pa*s | 8,8 | 3,0 | **3,0** | **3,0** | **3,0** | **3,0** | **3,0** |
| OH-Zahl der Mischung aus A1-1-a, A2a und A2b ([2]) | mg KOH/g | 198 | 218 | **219** | **219** | **219** | **219** | **219** |
| Verhältnis A1:A2 | | 12,8 | 2,3 | **2,0** | **2,0** | **2,0** | 2,0 | 2,0 |
| [1] berechnet nach ln(Viskosität Polyolmischung) = Anteil A1-1-a an der Mischung x ln(Viskosität A1-1-a) + Anteil A2-a an der Mischung x ln(Viskosität A2-a) + Anteil A2-b an der Mischung x ln(Viskosität A2-b). Eine Viskosität > 5 Pa*s ist ungünstig bei der Verarbeitung. | | | | | | | | |

Tabelle 4.

| **Beispiel** | | | **1*** | **2*** | **3** | **4** | **5** | **6*** |
|---|---|---|---|---|---|---|---|---|
| Mischzeit (s) | s | 8 | 8 | 8 | 8 | 8 | 8 | 8 |
| Startzeit (s) | s | 10 | 15 | 10 | 10 | 10 | 10 | 10 |
| Steigzeit (s) | s | 55 | 45 | 35 | 35 | 35 | 35 | 35 |
| Rohdichte Kern | $g/dm^3$ | 26,2 | 25,9 | 31,8 | 30,6 | 30,4 | 32,4 | 30,5 |
| Offenzelligkeit | | 10% | 53% | 18% | 13% | 8% | 59% | 34% |
| Druckfestigkeit in Steigrichtung | kPa | 221 | 156 | 201 | 234 | 243 | 192 | 225 |
| Zellstruktur | | Keine Störungen | Starke Störungen in Kuppe und Kern des Schaumstoffs | wenige leichte Störungen | Schaum sieht am besten aus | Störungen in der Kuppe des Schaumstoffs | Starke Störungen in Kuppe und Kern des Schaumstoffs | Starke Störungen in Kuppe und leichte im Kern des Schaumstoffs |
| **Kleinbrennertest** | | | | | | | | |
| Flammhöhe KBT | cm | 13 | 10 | **8** | **10** | **10** | 10 | 10 |
| **Cone-Calorimeter** | | | | | | | | |
| MARHE | $kW/m^2$ | 83 | 81 | **85** | **85** | **82** | 80 | 89 |
| CO Ausbeute | mol/kg | 8,6 | 6,6 | **7,3** | **7,0** | **7,1** | 7,2 | 7,1 |
| Rückstand nach dem versuch | Gew.-% | 35 | 32 | **30** | **31** | **33** | 35 | 36 |
| SEA | | 95 | 319 | **221** | **187** | **211** | 214 | 186 |

**Patentansprüche**

1. Polyolformulierung A, enthaltend

A1 35-89 Gew.-%, bezogen auf die Gesamtmasse der Polyolformulierung A, einer Polyesterpolyolkomponente, welche eine OH-Zahl von 190 - 310 mg KOH/g aufweist, bestehend aus

A1-1 mindestens ein Polyesterpolyol mit einer OH-Zahl ≤ 250 mg KOH/g, einer Funktionalität von 1,5 - 2,5 und einem Gehalt an freien Glykolen mit $M_n$ < 150 g/mol von < 6 Gew.-%, bezogen auf die Gesamtmasse von A1-1,
A1-2 optional weiteren Polyesterpolyolen, welche nicht unter die Definition von A1-1 fallen,

A2 10-40 Gew.-%, bezogen auf die Polyolformulierung A, eines oder mehrerer Polyethylenglykole mit einem mittleren Molgewicht von < 700 g/mol und einer mittleren Funktionalität < 2,5;
A3 optional weitere isocyanatreaktive Komponenten
A4 0,2-5 Gew.-%, bezogen auf die Polyolformulierung A, einer oder mehrerer Verbindungen ausgewählt aus der Gruppe bestehend aus

A4-1 eines Polyethylenglykol-2,4,6-trialkylphenylethern (Struktur I mit R5, R6, R7 = H, C1- bis C8-Alkyl) und
A4-2 Polyethylenglykol-2,4,6-triaralkylphenylethern (Struktur I mit R5, R6 und/oder R7 = Aryl) und
A4-3 Polyethylenglykol-alkylphenylethern (Struktur II)

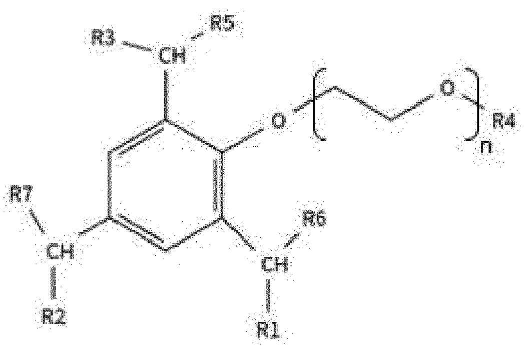

Struktur I

R1, R2, R3, R4 = H, C1-C4-Alkyl,
R5, R6, R7 = H, C1- bis C8-Alkyl, Aryl
n = 7-20, bevorzugt 10-18, besonders bevorzugt 11-15

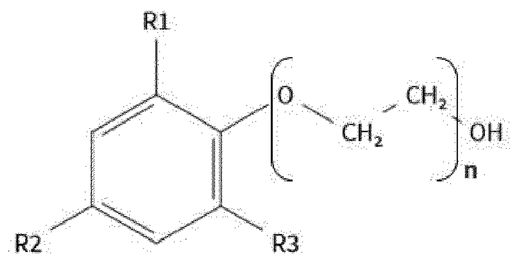

Struktur II

R1, R3 = H, $C(CH_3)_2CR4R5R6$
R2 = $C(CH_3)_2CR4R5R6$
R4, R5 = H oder $CH_3$
R6 = C2- bis C5-Alkyl, Aryl

n = 3-8

wobei die Verbindungen A4 ein Molgewicht von unter 1,5 kg/mol und ein Gehalt von 25-70% Ethylenoxid, bevorzugt 40-60% Ethylenoxid aufweisen, und
A5 gegebenenfalls weitere Hilfs- und Zusatzstoffe.
A6 0 - 2 Gew.-% Wasser, bezogen auf die Gesamtmasse der Polyolformulierung A.

**2.** Polyolformulierung A gemäß Anspruch 1, wobei die Polyolkomponente A1-1 eine Viskosität von > 5 Pa*s aufweist.

**3.** Polyolformulierung gemäß Anspruch 1 oder 2, wobei das Massenverhältnis von A1-1 zu A1-2 mindestens 6:1, insbesondere mindestens 8:1 beträgt.

**4.** Polyolformulierung gemäß einem der vorangehenden Ansprüche, wobei die Polyolkomponente A2 ein mittleres Molgewicht von 200-600 g/mol aufweist.

**5.** Polyolformulierung A gemäß einem der vorangehenden Ansprüche, wobei die Polyolkomponente A2 eine mittlere Funktionalität von ≤ 2,12 aufweist.

**6.** Polyolformulierung A gemäß einem der Ansprüche 1-3, wobei die Polyolkomponente A2 eine mittlere Funktionalität von ≤ 2,12 und ein mittleres Molgewicht von 200-600 g/mol aufweist

**7.** Polyolformulierung A gemäß einem der vorangehenden Ansprüche, wobei die Polyolkomponente A5 ein Flammschutzmittel umfasst.

**8.** Polyolformulierung A gemäß einem der vorangehenden Ansprüche, wobei die Mischung der Polyole A1 und A2 eine Viskosität < 4 Pa*s aufweist, insbesondere eine Viskosität von 2 - 4 Pa*s.

**9.** Verwendung einer Polyolformulierung gemäß einem der vorangehenden Ansprüche zur Herstellung von PUR-/PIR-Hartschaumstoffen.

**10.** Reaktionsgemisch zur Herstellung von PUR-/PIR-Hartschaumstoffen umfassend ei
ne Polyolformulierung A gemäß einem oder mehreren der vorangehenden Ansprüche 1 - 8,

eine Polyisocyanat-Komponente B,
ein Treibmittel C,
gegebenenfalls eine katalytisch aktive Komponente D,
welche eine Isocyanat-Kennzahl von 150 bis 600 aufweist.

**11.** Reaktionsgemisch gemäß Anspruch 8, wobei die Polyisocyanat-Komponente B aus mindestens einer Verbindung aus der Gruppe bestehend aus MDI, polymeres MDI und TDI ausgewählt wird, insbesondere polymeres MDI.

**12.** Verfahren zur Herstellung von PUR-/PIR-Hartschaumstoff umfassend die Umsetzung des Reaktionsgemisches gemäß Anspruch 10 oder 11.

**13.** PUR-/PIR-Hartschaumstoff, erhältlich nach dem Verfahren gemäß Anspruch 12.

**14.** Verwendung von PUR-/PIR-Hartschäumen nach Anspruch 12 zur Herstellung eines Isolationsmaterials und/oder von Verbundelementen.

Europäisches Patentamt
European Patent Office
Office européen des brevets

# EUROPÄISCHER RECHERCHENBERICHT

Nummer der Anmeldung
EP 19 18 5931

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2013/184366 A1 (JIMENEZ JORGE [US] ET AL) 18. Juli 2013 (2013-07-18)<br>* Absätze [0001], [0006], [0007] - Absatz [0017]; Ansprüche 1-12 *<br>* Beispiele *<br>* Absatz [0077] *<br>* Absatz [0092] - Absatz [0097] *<br>* Absatz [0101] - Absatz [0106] *<br>----- | 1-14 | INV.<br>C08J9/14<br>C08J9/00<br>C08K3/016<br>C08G18/22<br>C08G18/28<br>C08G18/32<br>C08G18/40<br>C08G18/42<br>C08G18/48<br>C08G18/76<br><br>ADD.<br>C08G101/00 |
| A | US 2014/364528 A1 (REXRODE ERIC M [US] ET AL) 11. Dezember 2014 (2014-12-11)<br>* Absätze [0002], [0007] - Absatz [0030]; Ansprüche 1-8 *<br>* Beispiele *<br>* Absatz [0072] *<br>----- | 1-14 | |
| A,D | US 2012/202903 A1 (ANDREW GARY DALE [US] ET AL) 9. August 2012 (2012-08-09)<br>* Absätze [0001], [0007] - Absatz [0012]; Ansprüche 1-21 *<br>* Beispiele *<br>----- | 1-14 | |

RECHERCHIERTE SACHGEBIETE (IPC)

C08G
C08J
C08K

Der vorliegende Recherchenbericht wurde für alle Patentansprüche erstellt

1

| Recherchenort | Abschlußdatum der Recherche | Prüfer |
|---|---|---|
| München | 16. Januar 2020 | Paulus, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 19 18 5931

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-01-2020

| Im Recherchenbericht angeführtes Patentdokument | Datum der Veröffentlichung | Mitglied(er) der Patentfamilie | Datum der Veröffentlichung |
|---|---|---|---|
| US 2013184366 A1 | 18-07-2013 | CN 103228701 A | 31-07-2013 |
| | | EP 2622001 A1 | 07-08-2013 |
| | | ES 2572478 T3 | 31-05-2016 |
| | | JP 5876492 B2 | 02-03-2016 |
| | | JP 2013538910 A | 17-10-2013 |
| | | KR 20140020819 A | 19-02-2014 |
| | | US 2013184366 A1 | 18-07-2013 |
| | | WO 2012041709 A1 | 05-04-2012 |
| US 2014364528 A1 | 11-12-2014 | CN 103339164 A | 02-10-2013 |
| | | EP 2655464 A1 | 30-10-2013 |
| | | JP 5931913 B2 | 08-06-2016 |
| | | JP 2014502651 A | 03-02-2014 |
| | | KR 20140030103 A | 11-03-2014 |
| | | US 2014364528 A1 | 11-12-2014 |
| | | WO 2012087667 A1 | 28-06-2012 |
| US 2012202903 A1 | 09-08-2012 | CA 2807666 A1 | 16-02-2012 |
| | | CN 103108919 A | 15-05-2013 |
| | | EP 2603560 A2 | 19-06-2013 |
| | | JP 5876485 B2 | 02-03-2016 |
| | | JP 6110431 B2 | 05-04-2017 |
| | | JP 2013533372 A | 22-08-2013 |
| | | JP 2015166472 A | 24-09-2015 |
| | | PL 2603560 T3 | 31-07-2015 |
| | | US 2012202903 A1 | 09-08-2012 |
| | | WO 2012021675 A2 | 16-02-2012 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20120202903 A
- US 5109301 A
- EP 2910585 A1
- EP 1359177 A1
- WO 2010043624 A
- EP 1923417 A
- US 2764565 A


### In der Beschreibung aufgeführte Nicht-Patentliteratur


- **IONESCU.** Chemistry and Technology of Polyols for Polyurethanes. Rapra Technology Limited, 2005
- Oligo-Polyols for Elastic Polyurethanes. 55 ff
- Polyester Polyols for Elastic Polyurethanes. 263 ff
- Polyether Polyols for Rigid Polyurethane Foams. 321 ff
- Polyester Polyols for Rigid Polyurethane Foams. 419 ff
- Polyurethane. Kunststoffhandbuch. vol. 7
- KunststoffHandbuch. Carl Hanser Verlag, 1993, vol. VII, 267 ff
- Polyurethan Taschenbuch. Carl Hanser Verlag, 2001, 83-102